# EUROPEAN PATENT APPLICATION

(11) **EP 0 566 853 A2**
(43) Date of publication of application: **27.10.1993**
(21) Application number: 93103767.5
(22) Date of filing: 09.03.1993
(51) Int. Cl.: B24B 53/00, B24B 1/00, G05B 19/18

(54) **Method and apparatus for dressing a grinding wheel**

(30) Priority: 26.03.1992 JP 68511/92
(71) Applicant: TOYODA KOKI KABUSHIKI KAISHA, Kariya-shi Aichi-ken (JP)
(72) Inventor: Yoneda, Takao, Nagoya-shi, Aichi-ken (JP); Hotta, Takayuki, Nagoya-shi, Aichi-ken (JP); Sawaki, Norikazu, Kariya-shi, Aichi-ken (JP)
(74) Representative: Tiedtke, Harro, Dipl.-Ing.

(57) **Abstract**

An apparatus for dressing a grinding surface of a grinding wheel (121) by a dresser (20) comprises means (19) for measuring a diameter of a cylindrical workpiece (W) ground by the grinding wheel (121), means (36) for measuring a circularity of the workpiece (W) based upon the measured diameter of the workpiece (W), means for detecting length of time period in which the circularity becomes a predetermined allowable value, means for judging whether or not the detected time length exceeds a first setting time, and means for starting a dressing operation using the dresser (20) when the detected time length exceeds the first setting time. Likewise, when the number of the workpieces which have been ground after last dressing operation becomes a preset value, the grinding wheel (121) is dressed by the dresser (20).

## Description

### BACKGROUND OF THE INVENTION

### Field of the Invention:

The present invention relates to a method and an apparatus for dressing a grinding wheel.

### Discussion of the Prior Art:

In a cylindrical grinding machine, for example, grinding ability of a grinding wheel becomes worse during a grinding operation for workpiece, thereby lowering the grinding efficiency and the grinding accuracy. It is thus necessary that the grinding wheel is dressed at suitable time intervals so as to restore the grinding ability. Further, as the diameter of the grinding wheel becomes small by grinding the workpiece or being dressed, the sharpness of the grinding wheel lowers rapidly. Therefore, the grinding wheel has to be dressed at intervals which are changed in response to the diameter of the grinding wheel.

In the conventional dressing apparatus, the diameter of the grinding wheel is measured and the dressing intervals are shortened in response to decrease of the measured diameter. Further, in the dressing apparatus disclosed in Japanese Laid-Open Patent Publication No. 54-101591, as the number of times of the dressing operations increases, the number of the workpieces which can be ground after each dressing operation is decreased, whereby the dressing intervals are changed in response to the diameter of the grinding wheel.

However, the former apparatus requires the device for measuring the diameter of the grinding wheel. Also, since such as CBN grinding wheel is worn out slowly, it is impossible to sufficiently restore the grinding ability of the grinding wheel by changing the dressing intervals in response to the diameter of the grinding wheel.

Since both of the conventional apparatus do not detect the sharpness of the grinding wheel directly, it is impossible to dress the grinding wheel at optimal intervals. Namely, since lowering of the sharpness of the grinding wheel depends on grinding conditions such as a material of the workpiece and a circumferential speed of the grinding wheel, the interval between every two successive dressing operations should be changed according to the grinding conditions. The dressing apparatus disclosed in Japanese Laid-Open Patent Publication No. 54-101591 decides the intervals between every two successive dressing operations by calculation. Therefore, the grinding wheel can not be dressed at optimal intervals.

### SUMMARY OF THE INVENTION

Accordingly, it is an object of the present invention to provide a method and an apparatus capable of dressing a grinding wheel at optimal intervals.

Another object of the present invention is to provide an improved method and apparatus which detect lowering of sharpness of the grinding wheel and dress the grinding wheel when the sharpness becomes less than a predetermined value.

Briefly, a method of dressing a grinding wheel according to the present invention comprises the steps of measuring a circularity (roundness) of a cylindrical workpiece ground by the grinding wheel, detecting the length of time period in which the circularity becomes a predetermined allowable value, judging whether or not the detected time length exceeds a first setting time, and dressing the grinding wheel using the dresser when the detected time length exceeds the first setting time.

Further, an apparatus for dressing a grinding surface of a grinding wheel by a dresser comprises means for measuring a radial dimension of a cylindrical workpiece ground by the grinding wheel, means for measuring a circularity of the workpiece based upon the measured dimension of the workpiece, means for detecting the length of time period in which the circularity becomes a predetermined allowable value, means for judging whether or not the detected time length exceeds a first setting time, and means for starting a dressing operation using the dresser when the detected time length exceeds the first setting time.

When the sharpness of the grinding wheel is lowered, the length of time period in which the circularity of the workpiece ground by the grinding wheel reaches the allowable value becomes long in proportion to the lowering of the sharpness of the grinding wheel. In the present invention, when it is judged that the time length in which the circularity of the workpiece reaches the allowable value becomes longer than the predetermined value, the grinding wheel is dressed by a dresser. Accordingly, the dressing intervals are determined independently of a diameter and a material of the grinding wheel, thereby carrying out optimal dressing operation in consideration of the lowering of the sharpness of the grinding wheel.

### BRIEF DESCRIPTION OF THE ACCOMPANYING DRAWINGS

Various other objects, features and many of the attendant advantages of the present invention will be readily appreciated as the same becomes better understood by reference to the following detailed description of the preferred embodiment when considered in connection with the accompanying drawings, in which:
FIG. 1 is a plan view illustrating a cylindrical grinding machine which has a dressing apparatus according to the present invention;
FIG. 2 is a block diagram illustrating a control portion of the grinding machine shown in FIG. 1;
FIGs. 3 (a) and (b) are flowcharts illustrating a grinding program executed by the CPU shown in FIG. 2; and
FIG. 4 is a flowchart illustrating in detail a spark-out step shown in FIG. 3.

### DETAILED DESCRIPTION OF THE PREFERRED EMBODIMENT

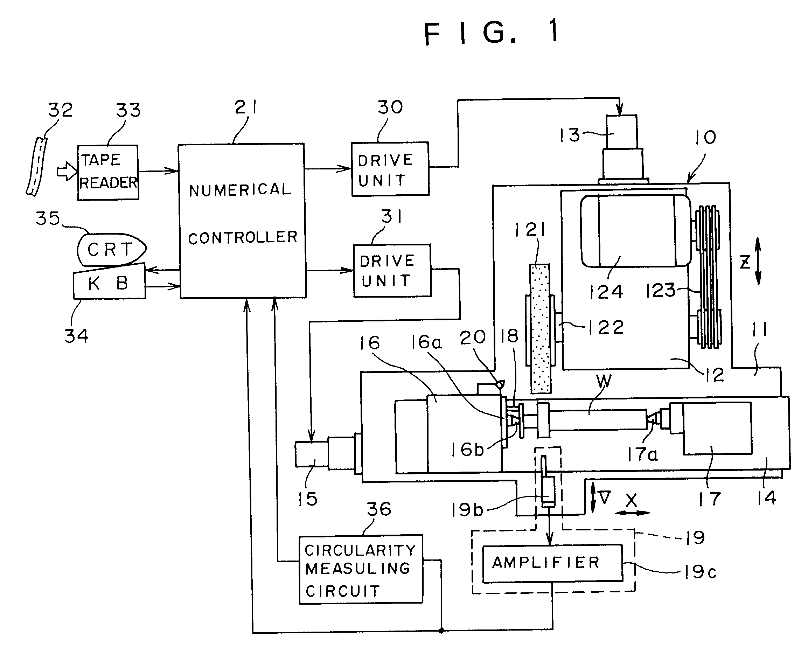

An embodiment of the present invention will be described hereinafter with reference to FIGs. 1 through 4.

FIG. 1 shows the overall structure of a cylindrical grinding machine which has an apparatus for dressing a grinding wheel according to the present invention. In FIG. 1, numeral 10 denotes a grinding machine, numeral 21 denotes a numerical controller for controlling the grinding machine 10. The grinding machine 10 is provided with a wheel head 12 guided on a bed 11 for movement in Z-axis direction, and a workpiece table 14 guided on the bed 11 for movement in X-axis direction perpendicular to the Z-axis direction. The wheel head 12 is moved by a servomotor 13 while the workpiece table 14 is moved by a servomotor 15.

The wheel head 12 is provided with a wheel spindle 122 carrying a grinding wheel 121 and a drive motor 124 which rotates the grinding wheel 121 via a rotational movement transmitting mechanism 123.

On the workpiece table 14, a spindle head 16 and a tailstock 17 are coaxially mounted to oppose each other. Both ends of a cylindrical workpiece W are supported by a center 16b attached to a main spindle 16a of the spindle head 16 and a center 17a of the tailstock 17. The spindle head 16 has a spindle motor (not shown). A pin 18 connects the main spindle 16a and the workpiece W and transmits torque from the spindle motor to the workpiece W. Disposed on the bed 11 is a measuring device 19 for measuring a diameter of the workpiece W ground by the grinding wheel 121. Further, the spindle head 16 is further provided with a dresser 20 for dressing a grinding surface of the grinding wheel 121.

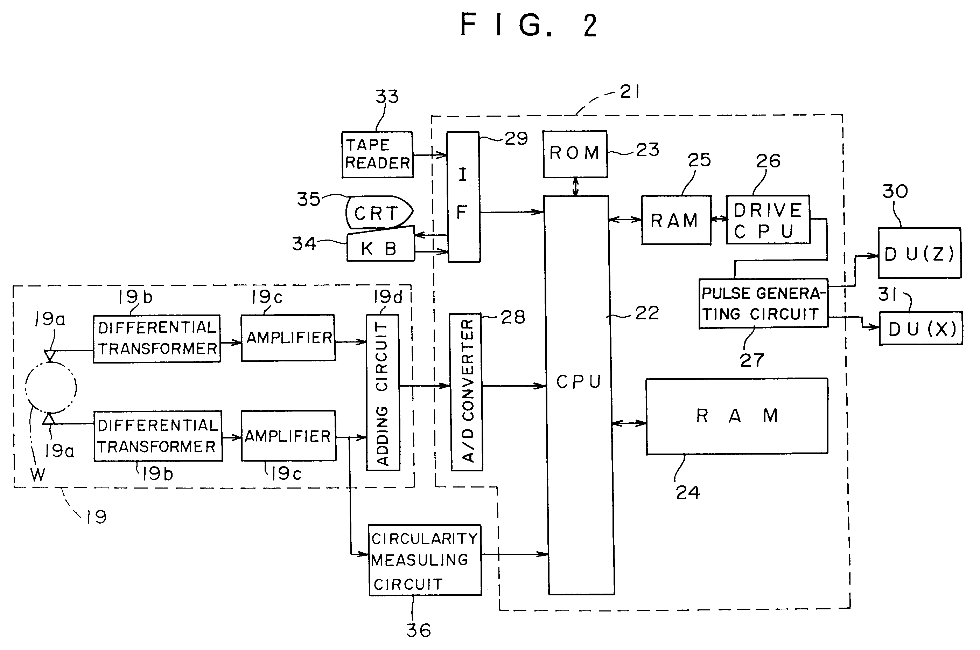

Referring to FIG. 2, the numerical controller 21 is composed of a main central processing unit 21 (hereinafter referred to as "main CPU") for controlling entire of the grinding machine; a ROM 23; a RAM 24 for storing a machining program, a dressing program and other data; a drive CPU 26 connected to the main CPU 22 via a RAM 25; a pulse generation circuit 27 for generating pulse signals in response to command signals output from the drive CPU 26; an A/D converter 28 which converts measured values into digital signals; and an interface 29.

The pulse generation circuit 27 is connected to the servomotors 13 and 15 via a drive unit 30 for Z-axis and a drive unit 31 for X-axis, respectively. The interface 29 is connected to a tape reader 33 for reading signs written on a punched tape 32, and a keyboard 34 through which the machining program, other data and various operation commands are input. Numeral 35 denotes a CRT which displays input data and various messages including a message indicating the occurrence of an abnormality. A machining program and a dressing program are input to the CPU 22 through the tape reader 33 in advance and stored in the RAM 24.

The measuring device 19 is composed of a pair of probes 19a which are contactable with an outer peripheral surface of the workpiece W, a pair of differential transformers 19b by which mechanical displacements of the probes 19a are converted to electrical signals, a pair of amplifiers 19c for amplifying signals output from the differential transformers 19b, and an adding circuit 19d which adds the signals amplified at the amplifiers 19c and output a diameter signal to the A/D converter 28, as shown in FIGs. 1 and 2. This diameter signal indicates the measured diameter of the workpiece. The measuring device 19 is arranged to be movable in V-axis direction shown in FIG. 1 by an actuator having a cylinder (not shown) and the like. A circularity measuring circuit 36 is further provided for measuring a circularity of the workpiece W based upon the signal output from the measuring device 19. Namely, the signal output from one of the amplifiers 19c, which represents radius of the workpiece W, is input to the circularity measuring circuit 36. Then, the circularity is obtained based upon the difference between the maximum value and minimum value of the signal within each revolution.

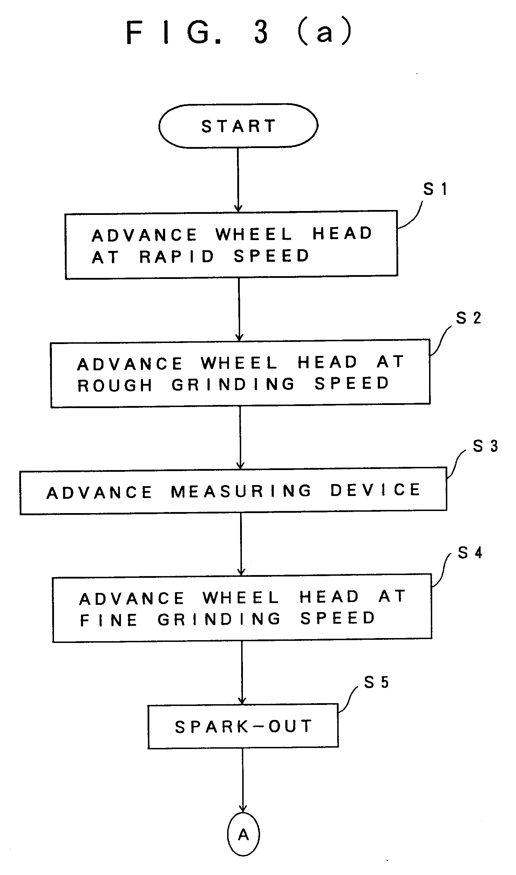

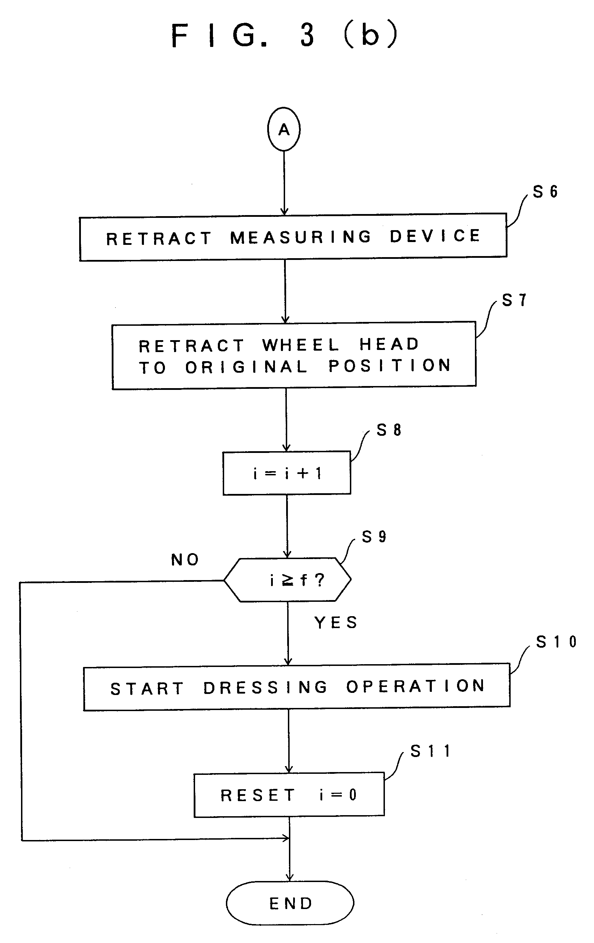

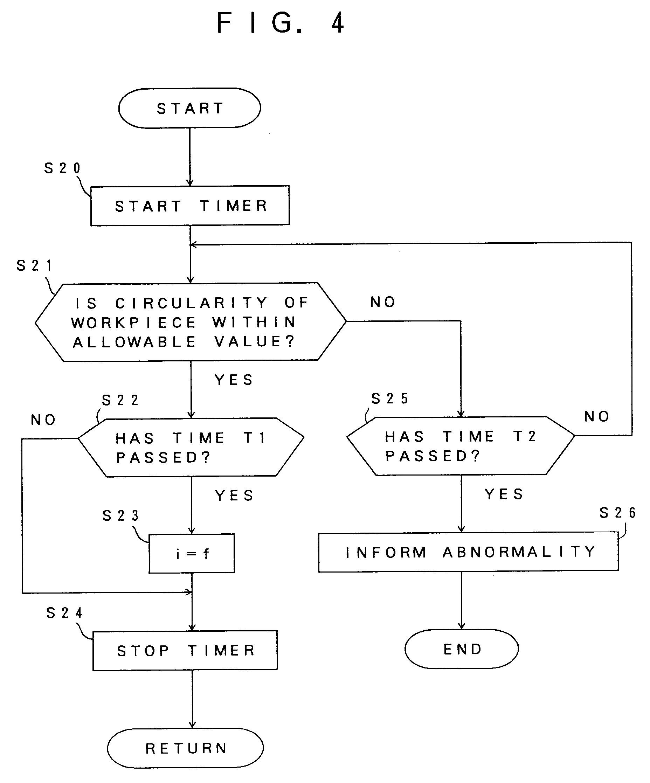

The operation of the grinding machine according to the present embodiment will be described with reference to the flowcharts shown in FIGs. 3(a), (b) and 4.

FIG. 3(a) is a main-routine of a grinding program for controlling a grinding operation. When processing of the main routine is started, at step S1, one command of the machining program is fetched from the RAM 25 so that the wheel head 12 is advanced at rapid speed. Namely, the drive CPU 26 operates in response to the fetched command and the pulse generation circuit 27 outputs the pulse signals corresponding to the predetermined rapid feed amount. The pulse signals are supplied to the drive unit 30 so as to drive the servomotor 13. The wheel head 12 is then advanced at rapid feed speed.

At step S2, a next command is fetched from the RAM 25 so that the wheel head 12 is advanced at a rough grinding feed speed by the processing similar to the above-described rapid feed. During the rough grinding feed, the grinding wheel 121 is contacted with the workpiece W and the grinding operation is started. When the rough grinding feed has been completed, the processing proceeds to step S3. At step S3, the measuring device 19 is advanced toward the workpiece W until the probes 19 are engaged with the outer peripheral surface of the workpiece W. At next step S4, the wheel head 12 is advanced at a fine grinding feed speed. In the fine grinding feed, the signals output from the measuring device 19 is used. When the diameter of the workpiece W measured by the measuring device 19 becomes a finishing diameter, the wheel head 12 is stopped. Thereafter, the processing proceeds to step S5 at which spark-out is executed.

The spark-out step is illustrated in detail in FIG. 4. At the first step S20, a timer is started for measuring a time length of the spark-out grinding. At step S21, the signal output from the circularity measuring circuit 36 is input in the CPU 22 to judge whether or not the circularity of the workpiece is within an allowable value. When it is judged at step S21 that the circularity is within the allowable value, the processing proceeds to step S22. When it is judged at step S21 that the circularity is not within the allowable value, the processing proceeds to step S25.

At step S22, it is judged whether or not the time length measured by the timer exceeds a first setting time T1. The first setting time T1, for example, is determined by following method. At first, the workpiece W is ground by the grinding wheel whose sharpness is lowered to the extent which needs the dressing operation. Subsequently, the length of the time period necessary for the circularity to become less than the allowable value by the spark-out is measured. Then, a time shorter than the measured time length by a predetermined time is used as the first setting time T1.

When it is judged at step S22 that the time length measured by the timer exceeds the first setting time T1, the processing proceeds to step S23. At step S23, parameter i representing the number of the workpieces which have been ground after last dressing operation is set to f. As described hereinafter, when the parameter i is set to f, the grinding wheel 121 is dressed. Then, at step S24, the timer is stopped and then the processing returns to the main-routine. When it is judged at step S22 that the time length measured by the timer does not exceed the first setting time T1, the processing proceeds to step S24.

While when it is judged at step S21 that the circularity is not within the allowable value, the processing proceeds to step S25. At step S25, it is judged whether or not the time length measured by the timer exceeds second setting time T2 for finding abnormality. Here, when it is judged that the time length measured by the timer does not exceed second setting time T2, the processing returns to step S21 at which it is judged again that whether or not the circularity reaches the allowable value. When it is judged at step S25 that the measured when exceeds the second setting time T2, the processing proceeds to step S26 at which the occurrence of an abnormal condition is informed to an operator through the CRT 35.

When the processing returns from step S24 to the main-routine shown, the measuring device 19 is retracted to its retracted position at step S6. At next step S7, the wheel head 12 is retracted to its original position. At step S8, the parameter i representing the number of the workpieces which have been ground is increased by one. At step S9, it is judged that whether or not the parameter i is equal to or larger than f. This value f is set in proportion to the number of the workpiece which can be ground between the last dressing operation and the next dressing operation. When it is judged at step S9 that the parameter i is equal to or larger than f, the processing proceeds to step S10. Here, in case where the time length of the spark-out grinding exceeds the first setting time T1, the parameter i is set to f at step S23, whereby the processing proceeds to step S10. At step S10, the workpiece table 14 and the wheel head 12 are moved according to the dressing program so that the grinding wheel 121 is dressed by the dresser 20. Thereafter, at step S11, the parameter i representing the number of the workpieces which have been ground is reset to zero.

In such present invention, the length of time period in which the circularity of the workpiece reaches the allowable value is measured by the timer during the spark-out grinding. In case where the measured time length becomes longer than the setting time T1, the grinding wheel is dressed by a dresser. Likewise, in case where the number of the workpieces which have been ground after last dressing operation become larger than the number of the workpiece which can be ground between the last dressing operation and the next dressing operation, the grinding wheel is dressed. Accordingly, the grinding wheel can be dressed at optimal dressing intervals independently of a diameter and a material of the grinding wheel. Further, it is possible to detect the sharpness of the grinding wheel accurately without the use of a sensor and the like. This prevents the grinding wheel from being dressed more than is necessary. The number of the workpieces which can be machined by one grinding wheel also increases and the whole machining cost including dressing cost is decreased. Incidentally, the method and apparatus of the present invention can be adapted in the method and apparatus for truing the grinding wheel using a truer.

Obviously, numerous modifications and variations of the present invention are possible in light of the above teachings. It is therefore to be understood that within the scope of the appended claims, the present invention may be practiced otherwise than as specifically described herein.

An apparatus for dressing a grinding surface of a grinding wheel by a dresser comprises means for measuring a diameter of a cylindrical workpiece ground by the grinding wheel, means for measuring a circularity of the workpiece based upon the measured diameter of the workpiece, means for detecting length of time period in which the circularity becomes a predetermined allowable value, means for judging whether or not the detected time length exceeds a first setting time, and means for starting a dressing operation using the dresser when the detected time length exceeds the first setting time. Likewise, when the number of the workpieces which have been ground after last dressing operation becomes a preset value, the grinding wheel is dressed by the dresser.

## Claims

1. A method of dressing a grinding surface of a grinding wheel by a dresser, said method comprising the steps of:
measuring a circularity of a cylindrical workpiece ground by said grinding wheel;
detecting the length of time period in which said circularity becomes a predetermined allowable value;
judging whether or not the detected time length exceeds a first setting time; and
dressing said grinding wheel using said dresser when the detected time length exceeds said first setting time.

2. A method of dressing a grinding surface of a grinding wheel by a dresser as set forth in Claim 1, wherein
the detection of said time length is started when an infeed of said grinding wheel is stopped, and is stopped when said circularity becomes the predetermined allowable value.

3. An apparatus for dressing a grinding surface of a grinding wheel by a dresser comprises:
means for measuring a radial dimension of a cylindrical workpiece ground by said grinding wheel;
means for measuring a circularity of said workpiece based upon the measured dimension of said workpiece;
means for detecting the length of time period in which said circularity becomes a predetermined allowable value;
means for judging whether or not the detected time length exceeds a first setting time; and
means for starting a dressing operation using said dresser when the detected time length exceeds said first setting time.

4. An apparatus for dressing a grinding surface of a grinding wheel by a dresser as set forth in Claim 3, wherein
said means for detecting the time length starts the detection of the time length when an infeed of said grinding wheel is stopped, and stops the detection of the time length when said circularity becomes the predetermined allowable value.

5. An apparatus for dressing a grinding surface of a grinding wheel by a dresser as set forth in Claim 3, wherein
said apparatus further comprises a means for counting the number of said workpieces which have been ground after last dressing operation; and
means for starting a dressing operation using said dresser when said counted number of said workpieces becomes a preset value.

6. An apparatus for dressing a grinding surface of a grinding wheel by a dresser as set forth in Claim 3, wherein
said apparatus further comprises means for outputting a signal indicating the occurrence of abnormality when said detected time length exceeds a second setting time longer than said first setting time.
